# EUROPEAN PATENT SPECIFICATION

(11) **EP 2 267 502 B1**
(45) Date of publication and mention of the grant of the patent: **04.06.2014**
(21) Application number: 10167378.8
(22) Date of filing: 25.06.2010
(51) Int. Cl.: G02B 6/38, H02G 1/08, G02B 6/44

(54) **Combination of signal conductor connector and receptacle, and installation method of said connector in said receptacle by means of fluid drag**
Kombination eines Signalleitersteckers und einer Steckverbinderbuchse sowie Installationsverfahren des Signalleitersteckers in die Steckverbinderbuchse mit Hilfe eines Pressgasstroms
Combinaison d'un connecteur de conducteur de signal et d'un réceptacle, et procédé d'installation dudit connecteur dans ledit réceptacle à l'aide d'un courant de fluide

(30) Priority: 26.06.2009 NL 2003089
(43) Date of publication of application: 29.12.2010
(73) Proprietor: Draka Comteq B.V., 1083 HJ Amsterdam (NL)
(72) Inventor: Griffioen, Willem, 2461 XJ, Ter Aar (NL)
(74) Representative: Hatzmann, Martin

(56) References cited:
- EP-A- 2 031 719
- US-A- 5 446 818
- US-A1- 2003 044 125
- US-A1- 2005 169 583
- GRIFFIOEN W. ET AL.: "Preferrulized Cables for Blowing to Homes through 4/3 mm Microducts" 56TH IWCS CONFERENCE, INTERNATIONAL WIRE AND CABLE SYMPOSIUM, LAKE BUENA VISTA, FL. USA, 11 November 2007 (2007-11-11), - 14 November 2007 (2007-11-14) pages 217-224, XP008117827 Eatontown, NJ, USA.

## Description

### Field

The invention relates to a system comprising an elongated signal conductor, having a signal conductor end, covered by a protective enclosure, and a coupling device, configured to receive the signal conductor end. Also, the invention relates to an installation method.

### Background

There is a need for Fibre to the x (Fttx) networks, for example Fibre to the Home (FttH) networks, which can be installed without the need to mount connectors at the homes (which would require highly skilled labour), and with a minimum of house visits (such visits are costly, and might require several house visits in case the house owner is not present).

EP2031719A1 discloses an assembly that facilitates installation of an optical fiber communication cable through a cable guide (for example a microduct). In the known configuration, a pre-ferrulized cable assembly comprises: a communication cable having a free, front end, said communication cable comprising at least one cable sheath coaxially surrounding an optical fiber; a semi-finished connector in communicative contact with said optical fiber, the semi-finished connector including a connecting element that fixedly surrounds said free, front end of said communication cable. A plug assembly is secured to the communication cable and/or the semi-finished connector, said plug assembly comprising a suction plug. After said plug assembly is removed, said connecting element can be mechanically connected to a complementary connector to form a completed communication connector.

Advantageously, according to EP'719, a semi-finished communication connector can be passed through a cable guide together with the communication cable in an effective manner, by using an air suction plug and exerting a pulling or pushing force, which may or may not be provided by a fluid medium (e.g., a gas) under pressure.

Known solutions, such as described in EP'719, usually require at least two house visits, one to install the microduct and a respective termination box, and one to snap the connector housing on the pre-ferruled cable and plug in to the termination box. It is a wish to limit the number of house visits to the absolute minimum: one.

US5446818 discloses a fiber optic connector having a shielding apparatus for protecting the exposed end of a fiber optic. The connector is used to couple the fiber optic to a xenon arc lamp. The shielding apparatus comprises an elongated barrel or cylindrical housing having first and second ends and a through-hole passing between the ends for reception of the fiber optic, a collet having a tubular body with first and second ends and a through-hole passing between the ends for movable reception of the elongated barrel, and a protective sleeve having first and second ends and a through-hole passing between the ends for movable reception of the collet.

The fiber optic is to be secured to the barrel, the barrel is to be inserted within the collet and the collet is to be inserted into the sleeve. After that, the shielding apparatus can be manipulated to place it in either a first protected mode in which the fiber optic end is retracted within the through-hole of the collet or a second unprotected mode in which the fiber optic end protrudes from the collet.

US2003/0044125 discloses a waferized fiber optic connector, having a retractable shroud.

US2005/1669583 discloses a fiber connector having a cover on a connector housing.

### Summary

The present invention aims to provide an improved system. Particularly, the present invention aims to provide a system that can be installed with a minimum of installation steps.

To this aim, the invention provides a system according to the features of claim 1.

The system comprises an elongated signal conductor, having a signal conductor end, covered by a protective enclosure; and a coupling device, configured to receive the signal conductor end. The system is configured to uncover the signal conductor end, when the signal conductor end of the signal conductor is inserted, using fluid drag, into the coupling device.

For example, an (automatic) uncovering of the signal conductor end can be achieved when the signal conductor end enters the coupling device, or after the signal conductor end has entered the coupling device, for example during the signal conductor end moving through the coupling device towards a final operating position. In a preferred elaboration, the elongated signal conductor is a fiber optics signal conductor (including at least one optical fiber), having a ferrule providing the signal conductor end.

For example, in a further embodiment, the signal conductor can be part of a pre-ferruled cable assembly. Preferably, during operation, an end section of the signal conductor is blown (for example from a microduct) into the coupling device, for example automatically snapping therein. In a further embodiment, the invention is used for blowing several signal conductors from a central point to multiple coupling devices, for example associated with multiple homes.

The invention can provide a significant reduction in installation steps. Particularly, the signal conductor can be fed towards the coupling device (for example using fluid drag via a microduct), whilst the (usually delicate, sensitive to scratching) signal conductor end is protected by a respective enclosure. The protective enclosure can be automatically opened or removed, for example under action of a fluid pressure, during insertion of the conductor end in the coupling device. The uncovered signal conductor end is then preferably automatically connected to a signal transmission part that is associated with the coupling device (for example a signal conductor end of a second signal conductor). Not only the house visit during cable installation can eliminated, also the house visit for connecting the cable can be eliminated.

According to an embodiment, the protective enclosure can have a first position, in which the enclosure covers a distal signal transmission surface of the signal conductor end of the signal conductor, wherein the protective enclosure can be adjustable from the first position to a second, opened position in which the signal conductor end is not covered by the enclosure.

In a further embodiment, the coupling device can be configured to constrain axial movement of the protective enclosure.

In a further embodiment, the coupling device can be configured to allow axial movement of the signal conductor end of the signal conductor after being uncovered, particularly to reach an operating position.

The invention also provides an installation method comprising:
- covering a signal conductor end of an elongated signal conductor;
- feeding an end section of the elongated signal conductor, which is provided with the covered signal conductor end, into a coupling device utilizing fluid drag; and
- uncovering the signal conductor end during inserting the end section into the coupling device.

The invention will now be described in more detail on the basis of exemplary embodiments shown in the accompanying drawings.

### Brief description of the drawings

Figure 1 schematically depicts a partly opened side view of a first embodiment of the invention, after the signal conductor end has entered the coupling device;
Figure 2 is similar to Fig. 1, showing the embodiment just before uncovering the signal conductor end;
Figure 3 is similar to Fig. 1, showing the embodiment with the signal conductor end in an operating position;
Figure 4 is similar to Fig. 1, showing a second embodiment;
Figure 5 depicts the second embodiment just before uncovering the signal conductor end;
Figure 6 depicts the second embodiment, with the signal conductor end in an operating position; and
Figures 7A, 7B, 7C schematically show cross-sections of three axial positions of part of the signal conductor with respect to the coupling device.

### Detailed description

In the present application, equal or similar features are denoted by equal or similar reference signs.

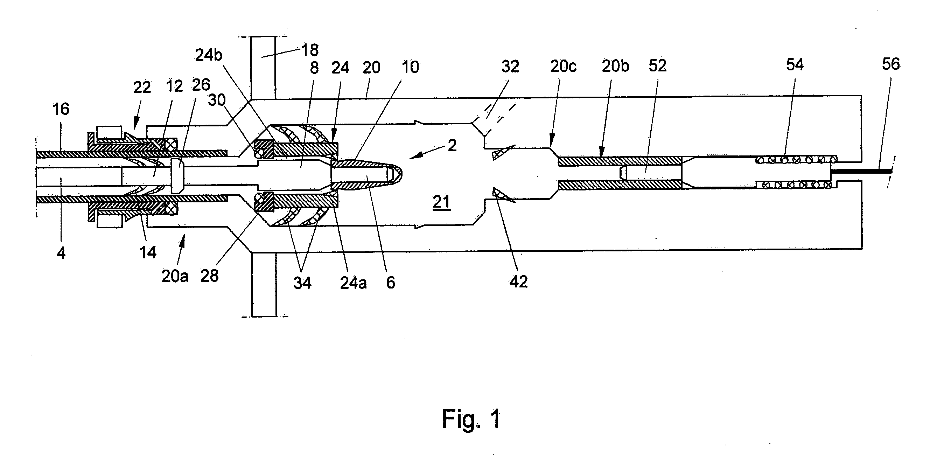

Figures 1-3 show a non-limiting example of a system comprising an elongated signal conductor 4, having a signal conductor end, covered by a protective enclosure 10, for example a cap 10, for example made of plastic, and a coupling device 20 (for example a receiving socket), configured to receive the signal conductor end.

The signal conductor 4 as such can be configured in various ways.

The signal conductor 4 can be or include an optical fiber or a cable comprising one or more optical fibers (providing one or more respective optical waveguides, for transmitting optical signals), for example enclosed within a buffer tube. For instance, optical fiber may be deployed in either a single fiber loose buffer tube or a multi-fiber loose buffer tube. In other embodiments, the buffer tube may tightly surround an outermost optical fiber coating (i.e., tight buffered fiber) or otherwise surround an outermost optical fiber coating or ink layer to provide an exemplary radial clearance of between about 50 and 100 microns (i.e., a semi-tight buffered fiber). With respect to the former tight buffered fiber, the buffering may be formed by coating the optical fiber with a curable composition (e.g., a UV-curable material) or a thermoplastic material. The outer diameter of tight buffer tubes, regardless of whether the buffer tube is formed from a curable or non-curable material, is typically less than about 1,000 microns (e.g., either about 500 microns or about 900 microns). With respect to the latter semi-tight buffered fiber, a lubricant may be included between the optical fiber and the buffer tube (e.g., to provide a gliding layer).

An exemplary buffer tube enclosing optical fibers as disclosed herein may be formed of polyolefins (e.g., polyethylene or polypropylene), including fluorinated polyolefins, polyesters (e.g., polybutylene terephthalate), polyamides (e.g., nylon), as well as other polymeric materials and blends. In general, a buffer tube may be formed of one or more layers. The layers may be homogeneous or include mixtures or blends of various materials within each layer.

In this context, the buffer tube may be extruded (e.g., an extruded polymeric material) or pultruded (e.g., a pultruded, fiber-reinforced plastic). By way of example, the buffer tube may include a material to provide high temperature and chemical resistance (e.g., an aromatic material or polysulfone material).

Although buffer tubes typically have a circular cross section, buffer tubes alternatively may have an irregular or non-circular shape (e.g., an oval or a trapezoidal cross section).

Alternatively, one or more of the present optical fibers may simply be surrounded by an outer protective sheath or encapsulated within a sealed metal tube. In either structure, no intermediate buffer tube is necessarily required.

Multiple optical fibers as disclosed herein may be sandwiched, encapsulated, and/or edge bonded to form an optical fiber ribbon. Optical fiber ribbons can be divisible into subunits (e.g., a twelve-fiber ribbon that is splittable into six-fiber subunits). Moreover, a plurality of such optical fiber ribbons may be aggregated to form a ribbon stack, which can have various sizes and shapes.

Generally, each of the fibers includes a fiber core and a respective cladding of glass, and one or more optional coatings. Optionally, the optical fiber may include an outermost ink layer. Also, a signal conductor 4 can include a single fibre, for example having a respective external protective fibre coating.

Preferably, "bend-insensitive" fibers (such as ITU-T G657 fibers) are applied, which may buckle (for example due to thermal fluctuations) or bend over a small radius with relatively little or no optical attenuation.

The present elongated signal conductor 4 is a (partly pre-connectorized) flexible fiber optics signal conductor, being integrally provided with a ferrule 6 providing the signal conductor end. More particularly, in the example, the signal conductor 4 is part of an assembly 2 of a cable 4, a ferrule 6, a ferrule holder 8, a ferrule protection cap 10 (enclosing the ferrule) and an airtight soaking piston 12 with a seal 14.

The system comprising an external elongated protective enclosure 16, for example a duct or tube, called a "microduct" in the following, the microduct 16 being configured to movably receive at least part of the elongated signal conductor 4. The microduct 16 encloses an internal receiving space, having a diameter that is larger than an external diameter of the optical signal conductor 4.

For example, the microduct 16 can be a hollow tube or duct, for example made of plastic (for example High Density Polyethylene, HDPE), configured for loosely receiving signal conductor 4. Preferably, the external surface of the signal conductor 4 is not attached to the internal surface of the microduct 16, such, that the signal conductor 4 can be moved in longitudinal directions through the microduct. In the present example, the external microduct 16 may have a circular cross-section; the microduct's cross-section can also have a different shape, for example oval, rectangular, hexagonal, or differently.

The microduct 16 is preferably flexible or bendable, allowing ease of installation. Also, The microduct is preferably constructed such that its bending radius is limited. Preferably, a radial and longitudinal freedom of the signal conductor 4 with respect to the microduct 16 is available, to make the signal conductor 4 relatively resistant to rough installation practices.

A proximal end of the microduct is connected or connectable to an inlet 20a of the coupling device 20 for feeding the elongated signal conductor 4 to (particularly into) the coupling device 20.

The signal conductor 4 is configured to be dragged in a longitudinal direction through the microduct, and into the coupling device 20, by a fluid drag (of fluid flowing along the signal conductor 4). To this aim, a fluid supply pump (not shown) can be connected to the duct 16, for feeding fluid therein. Also, optionally, the signal conductor 4 is provided with a laterally extending fluid drag force enhancing structure 14, for example one or more sealing flaps 14 of a soaking piston 12, preferably being spaced-apart from the protective cap 10 of the signal conductor end. During operation, a fluid that is fed to the microduct can act on conductor 4 (for example on the drag force enhancing structure 14), to move (preferably blow) the conductor 4 through the microduct 16. The fluid can be a gas or gas mixture, for example air, for blowing the assembly 2 through the microduct 16. Alternatively, a liquid is used to achieve the drag force.

The present coupling device 20 may be installed, for example, in a structural element, for example a wall 18 of a termination box. For example, the structural element 18 can be provided with a mounting opening or mounting passage for receiving/holding the coupling device 20. In a further example, the coupling device 20 can be part of a communication network termination box, or it can be mounted in a communication network termination box.

The coupling device 20 can be configured in various ways; for example, the coupling device 20 can be a connection block or body 20, defining a cavity 21 to receive an end section of the signal conductor 4. In the example, the cavity 21 is accessible for receiving the signal conductor via a respective inlet 20a. A conductor end receiving aperture 20b (for example the interior of a cylinder 50) is located opposite the inlet 20a.

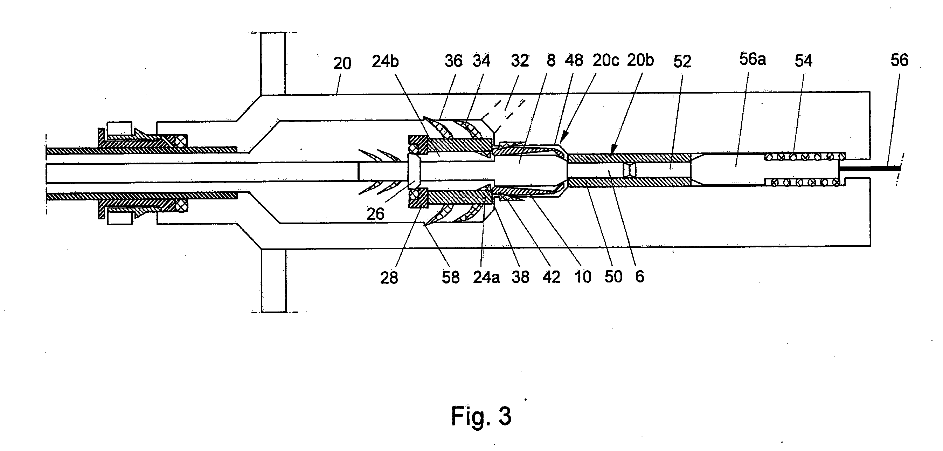

In the example, the coupling device contains a signal conductor end of a second signal conductor 56 (particularly of a respective second ferrule 52), for communicatively connecting to the signal conductor end of the first signal conductor 4, when the signal conductor end of the first signal conductor 4 is in its operating position (shown in Fig. 3). To this aim, the exposed end surface of the second ferrule 52 is faced towards the inlet 20a, in line with a centre line of the inlet 20a.Preferably, the coupling device 20 is provided with an axially movable second signal conductor end of the second signal conductor 56, and (optionally) a spring device 54 to counteract the axial movement with a spring force. For example, the spring device 54 can apply a spring force on an end section (ferrule holder) 56a of the second signal conductor, to press the second ferrule 52 onto the first ferrule 6 that is held in the operation position.

The coupling device 20 has a connecting structure, for example a push/pull connector 22 (of known technique) for connecting to the end part of the microduct 16. Preferably, the inlet 20a of the coupling device 20 can achieve a fluid-tight connection with an external surface of microduct 16, for example utilizing a sealing device, for example an O-ring. Besides, the coupling device 20 is provided with a fluid passage 32 (separate from the inlet 20a) for allowing discharge of fluid from the cavity 21.

Advantageously, the system 4, 20 is configured to uncover the signal conductor end of the signal conductor 4 when the signal conductor end of the signal conductor 4 is inserted into the coupling device 20. In the example, the coupling device 20 is configured to open the protective cap 10, for example after the signal conductor end has entered the interior space/cavity 21, and before reaching and communicatively coupling to the opposite signal conductor end of the second signal conductor 56. Thus, particularly, uncovering of the signal conductor end can be achieved in a substantially closed environment, shielded from surroundings, preventing damage and contamination of the signal conductor end. Also, the uncovering as such does not require manual action, since it can be achieved by (mechanical) interaction between the coupling device 20 and the cap 10.

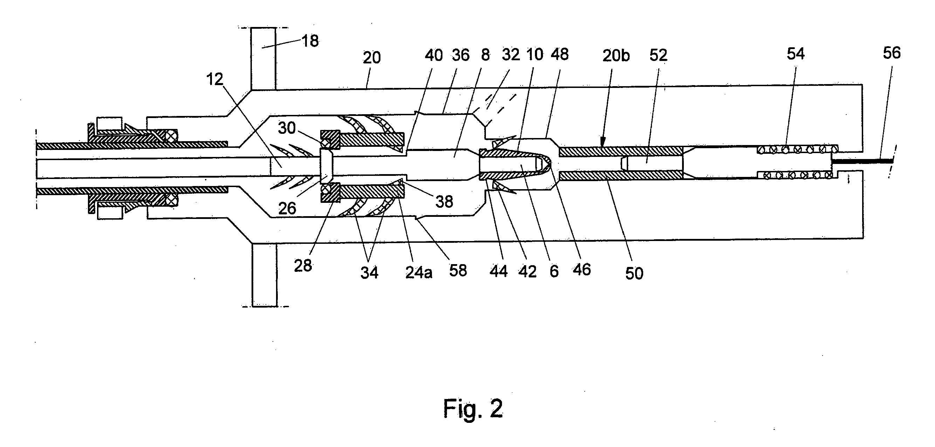

For example, the protective cap 10 has a first position, (see Figures 1-2) in which the enclosure covers a distal signal transmission surface of the signal conductor end of the signal conductor, wherein the protective cap 10 is adjustable from the first position to a second, opened position (see fig. 3) in which the signal conductor end is not covered by the enclosure. The protective cap 10 may be provided with a breaking or weakening section 46 (see Fig. 2), for example an indentation 46, to initiate opening of the protective cap 10 when the enclosure is subjected to an external mechanical force.

The present coupling device 20 is provided with a number of operating members 42 (for example resilient hooks 42), located in front of the conductor end receiving aperture 20b. The operating members 42 are configured to open the protective cap 10, particularly to apply said mechanical force, when the signal conductor end of the signal conductor 4 is being forced (by fluid pressure) towards its operating position with respect to the coupling device 20. Also, the protective cap 10 can be provided with a control part 44, configured to be operated by the operating members 42 of the coupling device 20 to uncover the signal conductor end of the signal conductor 4.

In the present example, the operating members 42 are configured to constrain axial movement of the protective cap 10, by blocking passage of the control part 44, the constraining leading to breaking of the cap 10. Besides, the ferrule 6 may act on an inner surface of the cap 10, to assist in the opening thereof, when the ferrule 6 is pressed towards the respective receiving aperture 20b. The operating members 42 allow axial passage of the signal conductor end (particularly the ferrule 6) of the signal conductor 4 (after being uncovered), particularly to reach the respective receiving aperture 20b.

Figure 2 depicts the system, just before the operating members 42 start cooperating with the control part 44 to split the cap 10. The coupling device may include an enclosure receiving cavity 20c, located in front of the conductor end receiving aperture 20b, for receiving the broken/split cap 10 (see Fig. 3) and ferrule holder 8.

The present system is configured to feed part of the signal conductor from the microduct 16 into the coupling device 20 utilizing fluid drag. The coupling device 20 as such comprises a fluid force enhancing structure 24, 34, configured to increase a force of fluid (being received from the external enclosure 16 into the coupling device 20) with respect to said drag force (that initially drags the signal conductor 4 through the microduct 16). The increased fluid force acts to feed the distal signal conductor part through at least part of the coupling device 20. Particularly, the fluid force enhancing structure 24, 34 of the coupling device 20 provides an increased surface area that is exposed to a (hydraulic) fluid pressure of the fluid (particularly increased with respect to a drag force enhancing surface area of the drag force enhancing structure 14), the increased surface area being associated with the signal conductor 4 for moving (pressing) the conductor 4 in a longitudinal direction. During operation, the relatively large surface area (associated with the piston 24) is exposed to the fluid (and respective hydrostatic fluid pressure), the resulting force acting via the piston onto the signal conductor 4 (particularly onto its end section), leading to a respective high mechanical force (between control part 44 and operating members 42) for efficiently and reliably opening the cap 10.

To this aim, the coupling device 20 includes a piston/cylinder-assembly. The cylinder 36 (for example having a circular cross-section), is defined by part of the cavity 21; the piston 24 is axially movable through the cylinder section 36 of the cavity 21 from an initial signal conductor receiving position near/at the inlet 20a (see Fig. 1) towards the conductor end receiving aperture 20b (see Fig. 3). Particularly, the piston 24 is configured to cooperate with (couple to) the end section of the signal conductor 4, fed from microduct 16 into the coupling device, to press the signal conductor end towards the respective operating position.

The piston 24 may be provided with a central piston member 24a having a laterally extending fluid force enhancing structure 34, for example one or more lateral flaps 34 that provide a large surface area upon which the fluid pressure (of fluid received in the coupling device 20) acts during operation. In the example, this structure 34 sealingly engages the inner surface of the cylinder 36 (to provide a fluid-tight sealing there-between).

Advantageously, to provide increased (hydraulic or pneumatic) fluid pressing force during operation, transversal dimensions (i.e. the cross-sectional area) of the interior of the cylinder 36 are larger than transversal dimensions of the interior of the microduct 16; similarly, an outer circumference of the piston 24 is significantly larger than transversal dimensions of the interior of the microduct.

The piston 24 has a central aperture 24b allowing passage of the signal conductor end of the signal conductor 4. The signal conductor 4 and the piston 24 are preferably configured to form a fluid-tight connection there-between, after the distal section of the signal conductor 4 has passed the aperture 24b. For example, the signal conductor 4 can be provided with a sealing part (for example a cylindrical plate) 26, that can sealingly engage a sealing part (in this example an annular section 28 having an O-ring 30) of the piston 24, after the signal conductor end has passed the aperture of the piston 24. The sealing parts 26, 30 also act as blocking parts, blocking further axial movement of the signal conductor's end section with respect to the piston 24, and may provide centering of the signal conductor's end section with respect to the piston 24

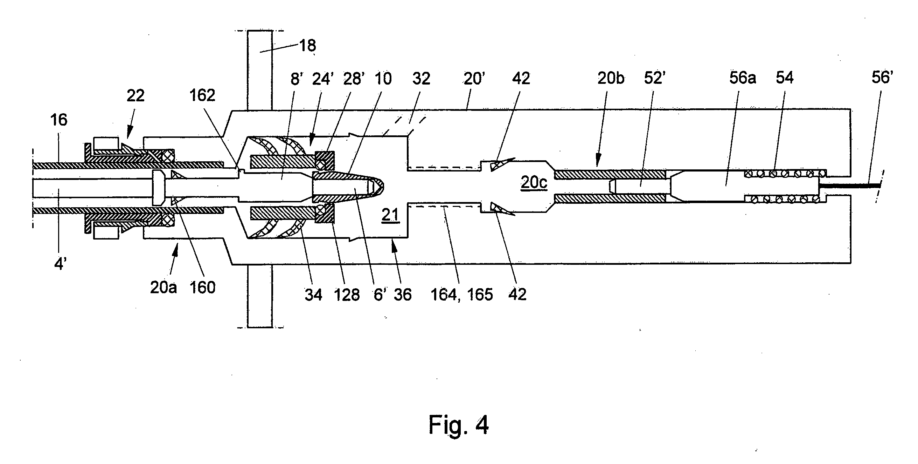

In the example, the end section of the signal conductor 4 is being provided with a pressing member 40 (in this case being a front edge 40 of the ferrule holder 8). The piston 24 of the coupling device 20 is configured to cooperate with the pressing member 40 to force the signal conductor end to its operating position. For example, to this aim, the piston 24 can be provided with (preferably resilient) hooks 38 that can mechanically act upon (for example grip in) the edge 40 of the ferrule holder 8, after the ferrule holder 8 has passed the piston aperture 24b. Alternatively, for example, to this aim, the ferrule holder can be provided with parts 160 that can mechanically act upon (for example grip in) the piston , after the ferrule holder has passed the piston aperture (as in the embodiment of Figures 4-6).

Also, in the example, a locking system 24, 34, 58 is provided, configured to lock the end section of the signal conductor 4 in place when the ferrule 6 has reached its operating position. In the embodiment, the piston/cylinder assembly is configured to provide such a locking system. Particularly, a sealing part 34 of the piston can lock into a depression 58 provided in the cylinder wall, when the ferrule 6 has reached its operating position. The locking can also be achieved in a different manner, for example utilizing another hook/depression combination (for example acting between the ferrule holder 8 and the coupling device 20).

Operation or use of the example can involve an installation method comprising: covering the signal conductor end of the elongated signal conductor 4 (utilizing the covering cap 10), feeding the end section of the elongated signal conductor 4, which is provided with the covered signal conductor end, into the coupling device 20, and automatically uncovering the signal conductor end during the inserting the end section into the coupling device 20. The end section of the elongated signal conductor 4 is dragged into the coupling device 20 utilizing fluid drag. Also during operation, the end section of the signal conductor 4 can be joined with a fluid force enhancer, being the piston 24. Fluid is fed to the piston 24, forcing the end section to the desired operating position, to contact the ferrule 52 of the second signal conductor 56.

More particularly, during operation, the receiving piston 24 is waiting in its initial position (near the inlet 20a) in the coupling device (see Fig. 1). The signal conductor assembly 2 can be fed through the microduct 16, coupled to the inlet 20a, towards the coupling device 20, utilizing fluid drag (for example by blowing). The protection cap 10 can enter the coupling device first, and can find its way through the aperture 24b of the receiving piston 24, for example helped by the centering function of respective soaking piston 12. The front section of the assembly 2 can continue its way -towards the conductor end receiving aperture 20b- until the sealing/blocking member 26 is fully inserted into the annular body 28 and sealed by O-ring 30. Now there is an airtight connection between piston 12 and receiving piston 24. The cylindrical plate 26 can serve for centering the end section of the assembly 2 (with respect to the opposite aperture 24b), so that centering can also take place when no piston 12 is used.

During operation, fluid supplied into the coupling device 20 leaves the cavity of the coupling device 20 through the fluid passage 32 (and via piston 24), until the signal conductor 4 and piston 24 have sealingly engaged each other. After the signal conductor 4 has sealingly engaged the piston 24 (via the annular body 28, O-ring 30 and cylindrical plate 26), substantially no fluid will pass the piston 24 (as piston seal 34 is in fluidtight engagement with the wall of the respective cylinder section 36 as well). As a result, the fluid (which is still being fed into the coupling device 20 via the microduct 16) acts to move the piston 24 towards the opposite conductor end receiving space 20b. During this movement, the end section of the signal conductor assembly 2 can stay connected to piston 24 by means of the resilient hooks 38, gripping in the edge 40 of the ferrule holder 8.

As is indicated in Figures 2-3, when the piston 24 is moving forward, the front section of the signal conductor assembly 2 can find its way through the resilient hooks 42, that can grip in the depression 44 of protection cap 10. Preferably, the piston 24 can achieve a high pressing force (reaching for example 10-100 N, depending on the cross-sectional area of piston 24 and the fluid pressure used), to split the protection cap 10, initiated at indentation 46. In the example, the remains of protection cap 10 just fit into the space 20c between ferrule holder 8 and an opposite wall surface of the coupling device 20.

After opening of the cap 10, the ferrule 6 can be inserted into the space 20b in the cylinder 50; the cylinder 50 forms a female connector together with the (optionally spring loaded) second ferrule 52 connecting to the second signal conductor 56 (for example a second signal conductor 56 of a termination box). Fluid force can move the piston 24 and signal conductor assembly 2 further, until the two ferrules 6, 52 make contact (under optional spring load), and until the locking system 34, 58 effects locking. At this point of connection, not only the signal conductor 4 will stop moving, also the fluid flow will stop flowing (this can be monitored elsewhere, remotely, for example at another end of the microduct 16, such as at a remote fluid supplying and cable launching location).

Note that in the present example, the piston 12 of the signal conductor 4 may cause the fluid flow to stop before the ferrule 6 has reached its operating position. This can be prevented, by an embodiment that does not include that piston 12, or an embodiment having a leaky piston 12.

### SECOND EMBODMENT

In the above described embodiment the tops of the ferrules 6, 52 physically contact each other after assembly, when the first signal conductor 4 has reached its operating position, to allow optical signal transmission therebetween. The tops of the ferrules 6, 52 are preferably polished to be a little spherical, assuring that the fibre end surfaces (which are centered in the ferrule) are always touching. The physical contact is for instance enhanced by the spring load, provided by the spring device 54. The signal attenuation is minimal for such connections.

In case of such spherical ferrule tops, some back reflection may still be present during operation, making analogue CATV difficult. This back reflection can be minimized using modified angle-polished connectors having angled physical contact (APC) ferrules. Here the ferrule end-faces of both signal conductors have been polished under an angle (particularly an angle larger than 1° relative to the plane perpendicular to the longitudinal axis of the ferrule, and typically an angle between 8°and 12°, for example 8°), reducing the back-reflected signal.

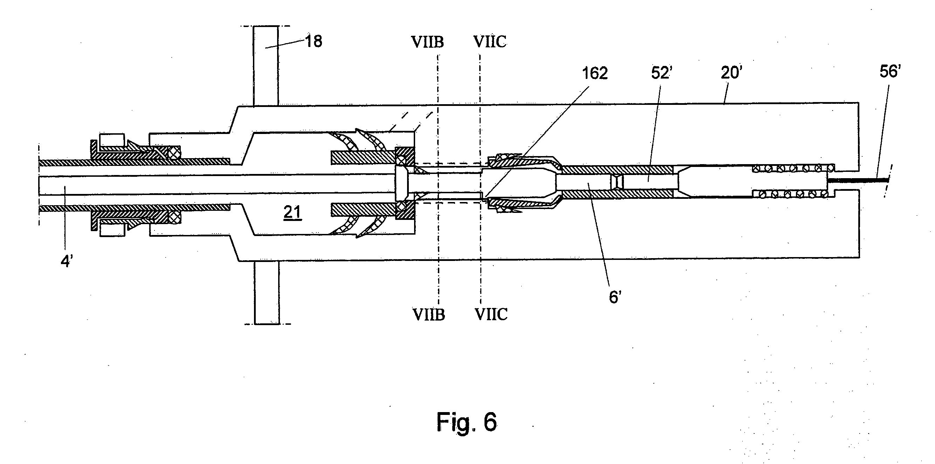

Figures 4-7 show an alternative, second, embodiment, which differs from the first embodiment, in that the signal conductor 4' and coupling device 20' are configured to cooperate to adjust a rotational position of the signal conductor end with respect to the coupling device 20'. Particularly, the second embodiment includes signal conductors 4', 56' having APC ferrules 6', 52' (with oblique end surfaces), the adjusting of the rotational position leading to joining these ferrules 6', 52' in the right, matching, operating position (shown in Fig. 6), to allow signal transmission therebetween.

As in the first embodiment, the coupling device 20' of the second embodiment defines a cavity 21 to receive an end section of the signal conductor 4' (the cavity 21 being accessible via a respective inlet 20a). The conductor end receiving aperture 20b is located opposite the inlet 20a. Also, a spring device 54 is preferably present, to counteract the axial movement of the end section (ferrule holder) 56a of the second signal conductor. The coupling device 20' of the second example has an afore-mentioned connecting structure 22 for connecting to the end part of a microduct 16, and an afore-mentioned fluid passage 32 for discharge of fluid from the cavity 21. As in the first embodiment, the present coupling device 20' is provided with a number of operating members 42, for opening the protective cap 10.

As in the first embodiment, the coupling device 20' includes a piston/cylinder-assembly 24', 36, providing a fluid force enhancing structure 24', 34. The piston 24' has a central piston member having the laterally extending fluid force enhancing structure (i.e. surface area inceasing structure) 34. In the second example, the signal conductor 4' carries the sealing part (for example a cylindrical plate) 26, to sealingly engage a sealing part (in this example an annular section 28' having an O-ring) of the piston 24, after the signal conductor end as well as the respective ferrule holder 8' have passed the aperture of the piston 24.

In the second example, a distal section of the ferrule holder 8' (located near the sealing part 26) has been provided with (resilient) hook parts 160 that can be pressed by the piston 24' in a direction towards the conductor end receiving aperture 20b, after the ferrule holder 8' and hook parts 160 have passed the piston aperture. As in the first embodiment, the locking system 24', 34, 58 is provided, configured to lock the end section of the signal conductor 4 in place when the ferrule 6 has reached its operating position.

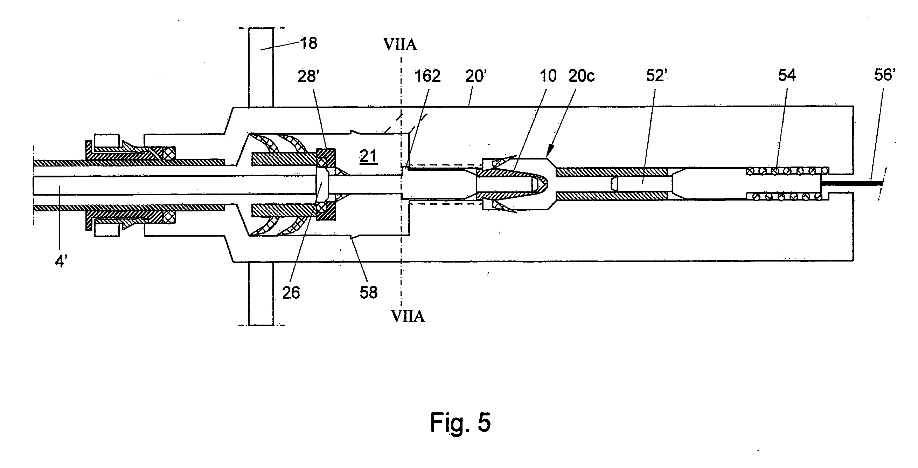

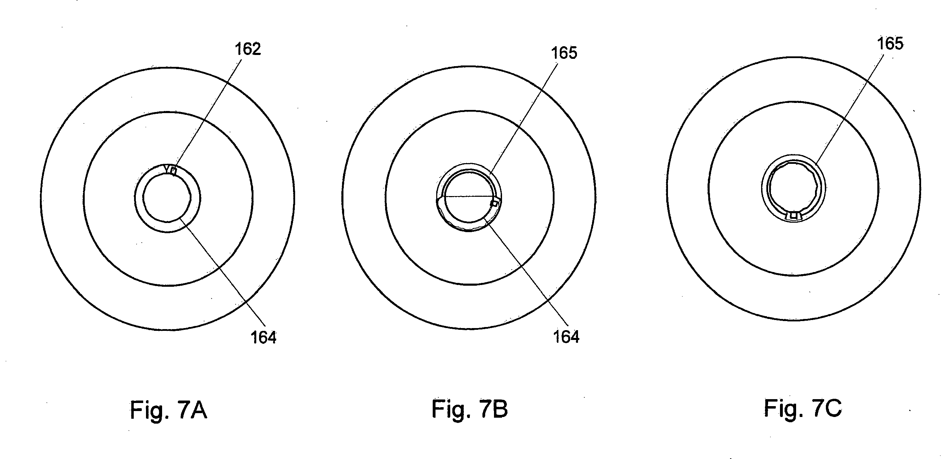

As is shown in Figures 5, 6, 7A-7C, in this example, the ferrule holder 8' and the coupling device 20' can mechanically interact, to rotate the ferrule holder 8' (about a respective longitudinal axis) when it is pressed towards the operating position. In this example, the mechanical interaction is achieved using a cam 162 (for example a small pin 162), protruding laterally from the ferrule holder 8', and a slit 164, defined by an inner cam guiding wall 165 (for example having inner ridges defining two helical guiding paths for guiding the cam towards the end position shown in Fig. 7C) of the coupling device 20'. At the cavity 21 (see Fig. 7A), the slit 164 has a ring-shaped cross-section, for receiving the cam 162 at any rotational position of the ferrule holder 8'. At the enclosure receiving cavity 20c (see Fig. 7C), the cross-section of the slit 164 has decreased so as to hold the cam 162 at a single rotational position thereby defining the desired rotational operating position of the ferrule holder 8' and first ferrule 6'. Thus, preferably, the cross-section of the slit 164 at the enclosure receiving cavity 20c is about the same or just slightly larger than a thickness of the cam 162 (measured in a tangential direction with respect to an outer contour of the ferrule holder 8' in this example).

Thus, as follows from Figures 4-7, the piston 24' is now placed behind the annular body 28. Also, in this case, the first signal conductor as such is not provided with a piston. The operation is substantially similar to the operation of the first embodiment, with the receiving piston 24' initially waiting (near the inlet 20a), and receiving the front section of the signal conductor assembly 4', 6', 8', 10. Fig. 4 shows the operation, when the ferrule holder 8' passes the coupling member's piston 24', and Fig. 5 shows the subsequent situation in case the fluid tight seal has been achieved between piston 24' and the sealing part 26. As in the first example, the piston 24' can achieve a high pressing force, to split the protection cap 10, when the holder 8' moves forwardly towards the end position (shown in Fig. 6). Also, the ferrule 6' is axially moved into the space 20b, towards it's operating position. Simultaneously with the axial movement, the cam 162 of the ferrule holder 8' is received in the slit 164, and is guided along a helical guiding path (along the respective ridges 165) towards the desired end position (shown in Fig. 7C). As a result, the first ferrule 6' is positioned into the right operating position, to match the second ferule 52' for allowing optimal signal transmission therebetween.

Summarizing, as follows from the above, aspects of the invention provide an installation method and pre-ferruled cable assembly 4, 6, 8, 10 with receiving socket 20 (also called a "coupling device"), which socket may for example be mounted and/or integrated into a termination box. The cable assembly can be blown through a microduct 16, preferably snapping automatically into the receiving socket 20. In a further embodiment, this automatic snapping can make use of an airplug waiting in the receiving socket to be closed by the ferrule and powered by the fluid flow. In this way, any house visit dedicated to connecting the cable 4 to the socket 20 (particularly to allow signal transmission with another signal conductor 56) can be eliminated. Preferably, after the connection has been made, not only the cable 4 stops moving automatically, also the airflow will stop, indicating that the ferrule 6 of the cable 4 has truly reached the desired operating position. The present system and method can advantageously be applied in installing a Fibre to the x (Fttx) network, for example a Fibre to the Home (FttH) network.

Thus, the present invention makes it possible to limit the number of house visits to only one, for installing tubing, electronics equipment and the like. For example, in cases where it is not sure that the house owner desires to have a functioning connection, the initial investments of the electronic equipment might not be economic. In this case it is possible to choose for a modular intermediate solution, where (when wished) the house visit is used to install only a first part (a first communication module) of equipment required to achieve a communication connection, the part to be installed at least including the connecting socket 20 (optionally with part of further electronics equipment, for example a signal source, a laser, LED, or vertical cavity surface emitting laser, optionally mounted on a ground plate). A second part (second communication module) of the equipment required to achieve the communication connection can be installed at the same time (to provide the communication connection at the same time), or at a later stage.

For example, after the socket 20 (and optionally some additional equipment) has been installed, a house owner himself may decide to install the second part of the equipment, to realize the communication connection. Further electronic equipment units (second communication modules), configured to be connected to the installed socket 20 and required to achieve a full operational connection, may be handed out or sold separately, for example via "do it yourself" shops. A modular type of plugging in, being connecting the first communication module and second communication module, can preferably be handled in a straight-forward manner, for example by the house owner himself.

In the foregoing specification, the invention has been described with reference to specific examples of embodiments of the invention. It will, however, be evident that various modifications and changes may be made therein without departing from the scope of the invention as set forth in the appended claims.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

The preferred embodiments shown all are equipped with a piston waiting to receive the pre-ferruled assembly. However, embodiments without such waiting pistons 24 are also possible (but then a piston 12 mounted on the assembly is preferably present) for example when forces of in the order of 10 N are sufficient to get the assembly locked in position in the receiving socket.

## Claims

1. System comprising:
- an elongated signal conductor (4), having a signal conductor end, covered by a protective enclosure (10); and
- a coupling device (20), configured to receive the signal conductor end; wherein the signal conductor (4) is configured to be dragged in a longitudinal direction into the coupling device (20) by a fluid drag,
wherein the system (4, 20) is configured to uncover the signal conductor end, when the signal conductor end of the signal conductor (4) is being dragged into the coupling device (20).

2. System according to claim 1, wherein the coupling device (20) is configured to open the protective enclosure (10), for example after the signal conductor end has entered an interior space of the coupling device (20).

3. System according to any of the preceding claims, wherein the coupling device (20) is provided with at least one operating member (42) configured to open the protective enclosure (10) when the signal conductor end of the signal conductor moves (4) towards an operating position with respect to the coupling device (20).

4. System according to claim 3, the protective enclosure (10) being provided with a control part (44), configured to be operated by the operating member of the coupling device (20) to uncover the signal conductor end of the signal conductor (4).

5. System according to any of the preceding claims, wherein the protective enclosure (10) is provided with a breaking or weakening section (46), to initiate opening of the protective enclosure (10) when the enclosure is subjected to an external mechanical force.

6. System according to any of the preceding claims, the coupling device containing a signal conductor end of a second signal conductor (56), for communicatively connecting to the signal conductor end of the first signal conductor (4) after the uncovering of that signal conductor end.

7. System according to claim 6, wherein the coupling device (20) is provided with an axially movable second signal conductor end of the second signal conductor (56), and a spring device (54) to counteract the axial movement with a spring force.

8. System according to any of the preceding claims, comprising an external elongated protective enclosure (16), for example a duct or tube, the enclosure (16) being configured to movably receive at least part of the elongated signal conductor (4), wherein a proximal end of the elongated protective enclosure (16) is connected or connectable to the coupling device (20) for feeding the elongated signal conductor (4) to the coupling device (20).

9. System according to claim 8, configured to feed part of the signal conductor from the external elongated protective enclosure (16) into the coupling device (20) utilizing fluid drag, the coupling device (20) comprising a fluid force enhancing structure (24, 34), configured to provide an increased force of fluid, received from the external enclosure (16) into the coupling device (20) with respect to said fluid drag, the increased fluid force acting to feed the signal conductor part through at least part of the coupling device (20).

10. System according to claim 8 or 9, the fluid force enhancing structure comprising a movable piston (24), the piston being configured to cooperate with an end section of the signal conductor (4), fed to the coupling device, to move the signal conductor end towards an operating position, a cross-sectional area of the interior of the cylinder being larger than a cross-sectional area of the interior of the external protective enclosure (16).

11. System according to claim 10, wherein the signal conductor (4) and the piston (24) are configured to form a fluid-tight connection there-between, particularly after part of the signal conductor (4) has passed an aperture of the piston (24).

12. System according to any of claims 10-11, wherein the piston (24) is provided with a central piston member (24a) having a laterally extending fluid pressure enhancing structure (34), for example one or more lateral flaps.

13. System according to any of claims 10-12, the end section of the signal conductor (4) being provided with a pressing member (40), the piston (24) of the coupling device (20) being configured to cooperate with the pressing member (40) to force the signal conductor end to its operating position.

14. System according to any of the preceding claims, wherein the signal conductor (4) is provided with a laterally extending fluid drag force enhancing structure (14), for example one or more lateral flaps, preferably being spaced-apart from the protective enclosure (10) of the signal conductor end.

15. System according to any of the preceding claims, the signal conductor (4) and coupling device (20) being configured to cooperate to adjust a rotational position of the signal conductor end with respect to the coupling device, particularly during axial movement of the signal conductor end with respect to the coupling device (20), the signal conductor end preferably being an oblique end surface of the signal conductor.

16. System according to any of the preceding claims, wherein the elongated signal conductor (4) comprises at least one optical fiber, having a ferrule (6) providing the signal conductor end.

17. An installation method comprising:
- covering a signal conductor end of an elongated signal conductor (4);
- dragging an end section of the elongated signal conductor (4), which is provided with the covered signal conductor end, into a coupling device (20), utilizing fluid drag;
- uncovering the signal conductor end during inserting the end section into the coupling device (20).

18. The method according to claim 17, including: joining the end section of the signal conductor with a fluid force enhancing structure, feeding fluid to the fluid force enhancing structure, and forcing the end section to an operating position.

19. The method according to any of claims 17-18, including: axially moving the signal conductor end with respect to the coupling device and simultaneously rotating the signal conductor end.

## Patentansprüche

1. System, umfassend:
- einen verlängerten Signalleiterstecker (4) mit einem Signalleiterende, umhüllt von einer Schutzumhüllung (10); und
- eine Kopplungsvorrichtung (20), konfiguriert für das Aufnehmen des Signalleiterendes;
wobei der Signalleiter (4) konfiguriert ist, um in einer Längsrichtung durch einen Flüssigkeitssog in die Kopplungsvorrichtung (20) gezogen zu werden, wobei das System (4, 20) konfiguriert ist, um das Signalleiterende freizulegen, wenn das Signalleiterende des Signalleiters (4) in die Kopplungsvorrichtung (20) gezogen wird.

2. System nach Anspruch 1, wobei die Kopplungsvorrichtung (20) konfiguriert ist, um die Schutzumhüllung (10) zu öffnen, beispielsweise nachdem das Signalleiterende in einen Innenraum der Kopplungsvorrichtung (20) eingedrungen ist.

3. System nach einem der vorhergehenden Ansprüche, wobei die Kopplungsvorrichtung (20) mit mindestens einem Bedienungselement (42) versehen ist, das konfiguriert ist, die Schutzumhüllung (10) zu öffnen, wenn sich das Signalleiterende in Bezug auf die Kopplungsvorrichtung (24) in eine Betriebsposition bewegt (4).

4. System nach Anspruch 3, wobei das Schutzgehäuse (10) mit einem Steuerteil (44) versehen ist, das konfiguriert ist, von dem Bedienungselement der Kopplungsvorrichtung (20) bedient zu werden, um das Signalleiterende des Signalleiters (4) freizulegen.

5. System nach einem der vorhergehenden Ansprüche, wobei die Schutzumhüllung (10) mit einem brechenden oder schwächenden Abschnitt (46) versehen ist, um das Öffnen der Schutzumhüllung (10) einzuleiten, wenn die Umhüllung einer äußeren mechanischen Kraft ausgesetzt wird.

6. System nach einem der vorhergehenden Ansprüche, wobei die Kopplungsvorrichtung ein Signalleiterende eines zweiten Signalleiters (56) umfasst, um es nach dem Freilegen des Signalleiterendes kommunikativ mit dem Signalleiterende des ersten Signalleiters (4) zu verbinden.

7. System nach Anspruch 6, wobei die Kopplungsvorrichtung (20) mit einem axial beweglichen zweiten Signalleiterende des zweiten Signalleiters (56) und einer Federvorrichtung (54), um der Axialbewegung mit einer Federkraft entgegenzuwirken, versehen ist.

8. System nach einem der vorhergehenden Ansprüche, umfassend eine externe verlängerte Schutzumhüllung (16), wie beispielsweise einen Schacht oder eine Röhre, wobei die Umhüllung (16) konfiguriert ist, um auf bewegliche Weise mindestens einen Teil des verlängerten Signalleiters (4) aufzunehmen, wobei ein proximales Ende der verlängerten Schutzumhüllung (16) verbunden oder verbindbar ist mit der Kopplungsvorrichtung (20), um den verlängerten Signalleiter (4) der Kopplungsvorrichtung (20) zuzuführen.

9. System nach Anspruch 8, das so konfiguriert ist, dass durch Nutzung des Flüssigkeitssogs ein Teil des Signalleiters von der externen verlängerten Schutzumhüllung (16) in die Kopplungsvorrichtung (20) zugeführt wird, wobei die Kopplungsvorrichtung (20) eine die Flüssigkeitskraft verstärkende Struktur (24, 34) umfasst, konfiguriert, um eine erhöhte Flüssigkeitskraft, empfangen von der externen Umhüllung (16), in der Kopplungsvorrichtung (20) in Bezug auf den Flüssigkeitssog bereitzustellen, wobei die erhöhte Flüssigkeitskraft bewirkt, dass das Signalleiterteil durch wendigstens einen Teil der Kopplungsvorrichtung (20) geführt wird.

10. System nach Anspruch 8 oder 9, wobei die Struktur zur Steigerung der Flüssigkeitskraft einen beweglichen Kolben (24) umfasst, der konfiguriert ist, um mit einem der Kopplungsvorrichtung zugeführten Endabschnitt des Signalleiters (4) zusammenzuwirken, um das Signalleiterende zu einer Bedienungsposition zu bewegen, wobei ein Querschnittbereich des Inneren des Zylinders größer ist als ein Querschnittbereich des Inneren der externen Schutzumhüllung (16).

11. System nach Anspruch 10, wobei der Signalleiter (4) und der Kolben (24) entsprechend konfiguriert sind, um untereinander eine flüssigkeitsdichte Verbindung zu bilden, insbesondere nachdem ein Teil des Signalleiters (4) eine Öffnung (24) des Kolbens passiert hat.

12. System nach einem der Ansprüche 10-11, wobei der Kolben (24) mit einem zentralen Kolbenelement (24a) versehen ist, das eine lateral verlängernde Struktur (34a) aufweist, welche den Flüssigkeitsdruck verstärkt, wie beispielsweise eine oder mehrere seitlichen Klappen

13. System nach einem der Ansprüche 10-12, wobei der Endabschnitt des Signalleiters (4) mit einem drückenden Element (40) versehen ist und der Kolben (24) der Kopplungsvorrichtung (20) konfiguriert ist, um mit dem drückenden Element (40) zusammenzuwirken, um das Signalleiterende in seine Betriebsposition zu zwingen.

14. System nach einem der vorhergehenden Ansprüche, wobei der Signalleiter (4) mit einer die Flüssigkeitssogkraft verstärkenden Struktur (14) versehen ist, zum Beispiel mit einer oder mehreren lateralen Klappen, die vorzugsweise in einem Abstand von der Schutzumhüllung (10) des Signalleiterendes angeordnet sind.

15. System nach einem der vorhergehenden Ansprüche, wobei der Signalleiter (4) und die Kopplungsvorrichtung (20) konfiguriert sind, um zusammenzuwirken, um eine Drehposition des Signalleiterendes in Bezug auf die Kopplungsvorrichtung, insbesondere während der Axialbewegung des Signalleiterendes in Bezug auf die Kopplungsvorrichtung (20), anzupassen, wobei das Signalleiterende vorzugsweise eine schräge Endfläche des Signalleiters ist.

16. System nach einem der vorhergehenden Ansprüche, wobei der verlängerte Signalleiter (4) mindestens einen Lichtwellenleiter mit einer Hülse (6), die das Signalleiterende bereitstellt, umfasst.

17. Installationsverfahren, umfassend:
- Umhüllen eines Signalleiterendes eines verlängerten Signalleiters (4);
- Ziehen eines Endabschnitts des verlängerten Signalleiters (4), der mit dem umhüllten Signalleiterende versehen ist, unter Verwendung eines Flüssigkeitssogs in eine Kopplungsvorrichtung (20);
- Freilegen des Signalleiterendes während des Einführens des Endabschnitts in die Kopplungsvorrichtung (20).

18. Verfahren nach Anspruch 17, einschließlich Verbinden des Endabschnitts des Signalleiters mit einer die Flüssigkeitskraft verstärkenden Struktur, Zuführen einer Flüssigkeit zu der die Flüssigkeitskraft verstärkenden Struktur und Zwingen des Endabschnitts in eine Betriebsposition.

19. Verfahren nach einem der Ansprüche 17-18, einschließlich axiales Bewegen des Signalleiterendes in Bezug auf die Kopplungsvorrichtung und gleichzeitiges Drehen des Signalleiterendes.

## Revendications

1. Système comprenant :
- un conducteur de signal allongé (4), ayant une extrémité de conducteur de signal, recouverte d'une enveloppe de protection (10) ; et
- un dispositif de couplage (20), configuré pour recevoir l'extrémité de conducteur de signal ;
dans lequel le conducteur de signal (4) est configuré pour être entraîné dans une direction longitudinale dans le dispositif de couplage (20) par un entraînement par fluide,
dans lequel le système (4, 20) est configuré pour découvrir l'extrémité de conducteur de signal, lorsque l'extrémité de conducteur de signal du conducteur de signal (4) est entraînée dans le dispositif de couplage (20).

2. Système selon la revendication 1, dans lequel le dispositif de couplage (20) est configuré pour ouvrir l'enveloppe de protection (10), par exemple après que l'extrémité de conducteur de signal a pénétré dans un espace intérieur du dispositif de couplage (20).

3. Système selon l'une quelconque des revendications précédentes, dans lequel le dispositif de couplage (20) est pourvu d'au moins un organe d'actionnement (42) configuré pour ouvrir l'enveloppe de protection (10) lorsque l'extrémité de conducteur de signal du conducteur de signal se déplace (4) vers une position de fonctionnement par rapport au dispositif de couplage (20).

4. Système selon la revendication 3, l'enveloppe de protection (10) étant pourvue d'une partie de commande (44), configurée pour être actionnée par l'organe d'actionnement du dispositif de couplage (20) pour découvrir l'extrémité de conducteur de signal du conducteur de signal (4).

5. Système selon l'une quelconque des revendications précédentes, dans lequel l'enveloppe de protection (10) est pourvue d'une section de freinage ou d'affaiblissement (46), pour démarrer l'ouverture de l'enveloppe de protection (10) lorsque l'enveloppe est soumise à une force mécanique externe.

6. Système selon l'une quelconque des revendications précédentes, le dispositif de couplage contenant une extrémité de conducteur de signal d'un deuxième conducteur de signal (56), pour permettre une connexion pour communication avec l'extrémité de conducteur de signal du premier conducteur de signal (4) après le découvrement de cette extrémité de conducteur de signal.

7. Système selon la revendication 6, dans lequel le dispositif de couplage (20) est pourvu d'une extrémité de second conducteur de signal, déplaçable axialement, du deuxième conducteur de signal (56), et un dispositif de ressort (54) pour s'opposer au déplacement axial avec une force élastique.

8. Système selon l'une quelconque des revendications précédentes, comprenant une enveloppe de protection allongée externe (16), par exemple un conduit ou un tube, l'enveloppe (16) étant configurée pour recevoir de manière mobile au moins une partie du conducteur de signal allongé (4), dans lequel une extrémité proximale de l'enveloppe de protection allongée (16) est connectée ou apte à être connectée au dispositif de couplage (20) pour amener le conducteur de signal allongé (4) au dispositif de couplage (20).

9. Système selon la revendication 8, configuré pour amener une partie du conducteur de signal depuis l'enceinte de protection allongée externe (16) jusque dans le dispositif de couplage (20) à l'aide d'un entraînement par fluide, le dispositif de couplage (20) comprenant une structure d'augmentation de force de fluide (24, 34), configurée pour fournir une force augmentée d'un fluide, reçu de l'enceinte externe (16) et pénétrant dans le dispositif de couplage (20), relativement audit entraînement par fluide, la force de fluide augmentée agissant de manière à amener la partie du conducteur de signal à travers au moins une partie du dispositif de couplage (20).

10. Système selon la revendication 8 ou 9, la structure d'augmentation de force de fluide comprenant un piston mobile (24), le piston étant configuré pour coopérer avec une section d'extrémité du conducteur de signal (4), amené au dispositif de couplage, pour déplacer l'extrémité de conducteur de signal vers une position de fonctionnement, une aire en section transversale de l'intérieur du cylindre étant plus grande qu'une aire en section transversale de l'intérieur de l'enveloppe de protection externe (16).

11. Système selon la revendication 10, dans lequel le conducteur de signal (4) et le piston (24) sont configurés pour former une connexion étanche aux fluides entre eux, en particulier après qu'une partie du conducteur de signal (4) a passé une ouverture du piston (24).

12. Système selon l'une quelconque des revendications 10-11, dans lequel le piston (24) est pourvu d'un élément de piston central (24a) ayant une structure d'augmentation de pression de fluide (34) s'étendant latéralement, par exemple un ou plusieurs volets latéraux.

13. Système selon l'une quelconque des revendications 10-12, dans lequel le conducteur de signal (4) est pourvu d'un organe de pression (40), le piston (24) du dispositif de couplage (20) étant configuré pour coopérer avec l'organe de pression (40) afin de forcer l'extrémité de conducteur de signal vers sa position de fonctionnement.

14. Système selon l'une quelconque des revendications précédentes, dans lequel le conducteur de signal (4) est pourvu d'une structure d'augmentation de force d'entraînement par fluide (14) s'étendant latéralement, par exemple un ou plusieurs volets latéraux, de préférence espacés de l'enveloppe de protection (10) de l'extrémité de conducteur de signal.

15. Système selon l'une quelconque des revendications précédentes, le conducteur de signal (4) et le dispositif de couplage (20) étant configurés pour coopérer afin d'ajuster une position en rotation de l'extrémité de conducteur de signal par rapport au dispositif de couplage, en particulier pendant un déplacement axial de l'extrémité de conducteur de signal par rapport au dispositif de couplage (20), l'extrémité de conducteur de signal étant une surface d'extrémité oblique du conducteur de signal.

16. Système selon l'une quelconque des revendications précédentes, dans lequel le conducteur de signal allongé (4) comprend au moins une fibre optique, ayant une ferrule (6) constituant l'extrémité de conducteur de signal.

17. Procédé d'installation comprenant :
- le recouvrement d'une extrémité de conducteur de signal d'un conducteur de signal allongé (4) ;
- l'entraînement d'une section d'extrémité du conducteur de signal allongé (4), qui est pourvu de l'extrémité de conducteur de signal recouverte, dans un dispositif de couplage (20), à l'aide d'un entraînement par fluide ;
- le découvrement de l'extrémité de conducteur de signal pendant l'insertion de la section d'extrémité dans le dispositif de couplage (20).

18. Procédé selon la revendication 17, comportant : l'union de la section d'extrémité du conducteur de signal à une structure d'augmentation de force de fluide, l'amenée d'un fluide à la structure d'augmentation de force de fluide, et l'entraînement en force de la section d'extrémité vers une position de fonctionnement.

19. Procédé selon l'une quelconque des revendications 17-18, comportant : le déplacement axial de l'extrémité de conducteur de signal par rapport au dispositif de couplage et la rotation simultanée de l'extrémité de conducteur de signal.
